# EUROPEAN PATENT APPLICATION

(11) **EP 4 765 309 A1**
(43) Date of publication of application: **24.06.2026**
(21) Application number: 25222043.9
(22) Date of filing: 10.12.2025
(51) Int. Cl.: H01M 10/42, H01M 50/209, H01M 50/244, H01M 50/284, H01M 50/503, H01M 50/507, H01M 50/516, H01M 50/519

(54) **SECONDARY BATTERY MODULE AND APPARATUS FOR MANUFACTURING THE SAME**

(30) Priority: 17.12.2024 KR 20240188634
(71) Applicant: SAMSUNG SDI CO., LTD., Yongin-si, Gyeonggi-do 17084 (KR)
(72) Inventor: CHOI, Seokju, 17084 Yongin-si (KR); JUNG, Woonchool, 17084 Yongin-si (KR)
(74) Representative: Maiwald GmbH

(57) **Abstract**

The present disclosure provides a secondary battery module (20) having a cell connection unit (30) that maintains the connection between bus bars (40) and circuit boards (50) and battery cells, and thus a process of manufacturing the secondary battery module (20) is simple, and problems such as electrical short and the like due to welding failure of bus bars (40) do not occur, and an apparatus for manufacturing the same. The secondary battery module (20) includes a module main body (60) including a cell housing (61), which opens upwardly and provides an accommodation space, and a plurality of battery cells arranged in the cell housing (61), and a cell connection unit (30) including a unit base (31) coupled to an upper portion of the cell housing (61), a plurality of bus bars (40) that are fitted to the unit base (31) and connected to the battery cell, and circuit boards (50) connected to the bus bars (40).

## Description

### FIELD

The present disclosure relates to a secondary battery module and an apparatus for manufacturing the same, and more specifically, to a secondary battery module having a structure in which bus bars and circuit boards (e.g., flexible printed circuit boards (FPCBs)) can be rapidly and accurately connected to battery cells, and an apparatus for manufacturing the same.

### BACKGROUND

Secondary batteries are batteries that can be charged or discharged, unlike primary batteries that cannot be recharged. Generally, secondary batteries include an electrode assembly composed of positive and negative electrode plates, a case that accommodates the electrode assembly, electrode terminals connected to the electrode assembly, a vent for discharging (degassing) gas generated inside the case, etc. Recently, large-capacity secondary batteries are being used as batteries for driving motors and batteries for storing power in hybrid vehicles, electric vehicles, and the like.

Meanwhile, secondary battery modules include bus bars and circuit boards (e.g., flexible printed circuit boards (FPCBs)) in addition to battery cells. The bus bars and circuit boards are parts that are connected to the battery cells. However, conventionally, connecting bus bars and circuit boards to battery cells has been very cumbersome. This is because the bus bars supplied individually needed to be placed on terminals of the battery cells and welded one by one.

Further, when the type of the secondary battery module is changed, there is also the inconvenience of having to reset the line equipment related to welding. For example, a shielding jig should be reset according to the type thereof. Such work significantly reduces work efficiency.

The herein information disclosed in this Background section is for enhancement of understanding of the background of the present disclosure, and therefore, it may contain information that does not constitute related (or prior) art.

### SUMMARY

The present disclosure is directed to providing a secondary battery module of which a manufacturing process is simple and which has a structure that prevents problems such as electrical short and the like caused by welding failure of bus bars.

The present disclosure is also directed to providing an apparatus for manufacturing a secondary battery module that allows the connection work of bus bars and printed circuit boards to battery cells to be rapidly performed, does not causing welding failure, and has a short change time for production line equipment settings even when the type of the secondary battery module is changed.

According to aspects of the present disclosure, there is provided a secondary battery module which includes a module main body including a cell housing which opens updwardly and provides an accommodation space, and a plurality of battery cells arranged in the cell housing, and a cell connection unit including a unit base coupled to an upper portion of the cell housing, a plurality of bus bars fitted to the unit base and connected to the battery cell, and circuit boards connected to the bus bars.

According to aspects of the present disclosure, there is provided an apparatus for manufacturing a secondary battery module, which includes a carrier supporting a module main body and having a marking unit that is mounted on one side thereof and provides information on the module main body, wherein the module main body includes a cell housing which opens updwardly and provides an accommodation space, and a plurality of battery cells arranged in the cell housing, a recognition unit configured to recognize the marking unit, a control unit that is connected to the recognition unit to receive data recognized by the recognition unit, a cell connection unit transfer device that mounts a cell connection unit, which includes a unit base that is connectable to an upper portion of the cell housing, bus bars that are mounted on the unit base and correspond to the battery cells, and circuit boards connected to the bus bars on the module main body, a shielding jig transfer device configured to mount a shielding jig on the cell connection unit, and a welding device configured to weld the bus bars to the battery cells through a path of the shielding jig while the shielding jig is mounted.

Aspects and features of the present disclosure are not limited to those described herein, and other aspects and features not specifically mentioned herein will be clearly understood by those skilled in the art from the description of the present disclosure

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1 is a perspective view of a prismatic secondary battery embedded into a secondary battery module according to embodiments of the present disclosure;
FIG. 2 is a cross-sectional view along line A-A of FIG. 1;
FIG. 3 is a plan view of a secondary battery module according to embodiments of the present disclosure;
FIG. 4 is a cross-sectional view partially illustrating a basic structure of a cell connection unit illustrated in FIG. 3;
FIG. 5 is a perspective view of a secondary battery pack in which the secondary battery module according to embodiments of the present disclosure is embedded;
FIG. 6 is a view illustrating the secondary battery pack of FIG. 5 applied to a vehicle;
FIG. 7 is a partial plan view of the cell connection unit illustrated in FIG. 3;
FIG. 8 is a partial perspective view for describing a configuration of a unit base included in the cell connection unit illustrated in FIG. 7;
FIG. 9 is a view for describing a method of fixing a bus bar to the unit base of FIG. 8;
FIGS. 10 to 16 are views illustrating several implementation examples of bus bars applicable to the cell connection unit of FIG. 7;
FIGS. 17 and 18 are views illustrating a cell connection unit that is connected to a prismatic secondary battery embedded into a cell housing;
FIG. 19 is a block diagram illustrating a configuration of an apparatus for manufacturing a secondary battery module according to embodiments of the present disclosure;
FIG. 20 is a view illustrating a cell connection unit that is transferred using a transport robot of FIG. 19;
FIG. 21 is a view illustrating a shielding jig that is set onto an upper portion of the cell connection unit using a shielding jig transfer device of FIG. 19; and
FIG. 22 is a view illustrating a bus bar of the cell connection unit that is welded to a secondary battery using a welding device.

### DETAILED DESCRIPTION

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her disclosure in the best way.

The embodiments described in this specification and the configurations shown in the drawings are only some embodiments of the present disclosure and do not represent all of the aspects, features, and embodiments of the present disclosure.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

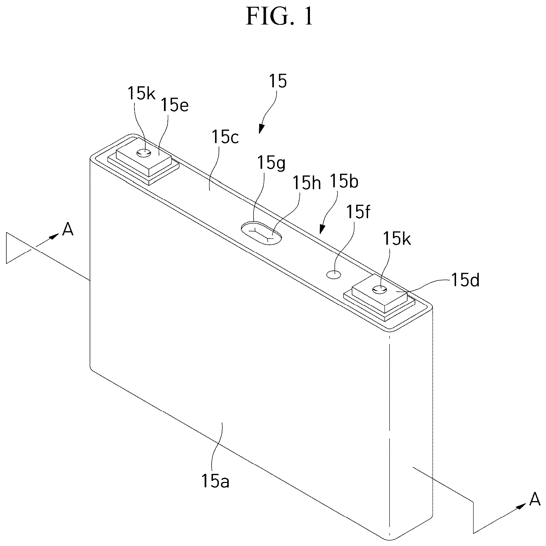

FIG. 1 is a perspective view of a prismatic secondary battery embedded into a secondary battery module according to embodiments of the present disclosure.

A case 15a forms the overall appearance of a prismatic battery and may be formed of a conductive metal such as aluminum, an aluminum alloy, or nickel-plated steel. In addition, the case 15a may provide a space for accommodating an electrode assembly therein.

A cap assembly 15b may include a cap plate 15c that covers the opening of the case 15a. In some examples, the case 15a and the cap plate 15c may be made of a conductive material. Here, a positive electrode terminal 15d and a negative electrode terminal 15e may be installed to be electrically connected to positive and negative electrodes tabs therein, respectively, and exposed to the outside of the cap plate 15c.

An electrolyte injection port 15f may be formed in the cap plate 15c, a vent hole 15g may be opened, and a vent 15h may be joined to the vent hole 15g. The vent 15h is opened by gas generated inside the battery and performs a degassing function.

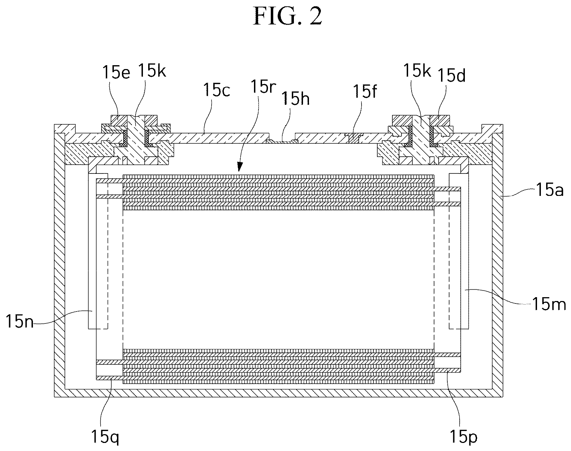

FIG. 2 is a cross-sectional view along line A-A of FIG. 1.

The electrode assembly 13a may be formed by winding or stacking a first electrode plate, a separator, and a second electrode plate formed in a plate shape or film shape. When the electrode assembly 15r is a wound stack, a winding axis may be parallel to the longitudinal direction of the case. In some other embodiments, the electrode assembly 15r is a stack type rather than a winding type. The shape of the electrode assembly 15r is not limited in the present disclosure.

In addition, the electrode assembly 15r may be a Z-stack electrode assembly in which a positive electrode plate and a negative electrode plate are inserted into both sides of a separator, which is then bent into a Z-stack. In addition, one or more electrode assemblies 15r may be stacked such that long sides of the electrode assemblies are adjacent to each other and accommodated in the case, and the number of electrode assemblies in the case is not limited in the present disclosure. The first electrode plate of the electrode assembly 15r may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 43 (e.g., a first uncoated portion) that is a region to which the first electrode active material is not applied. The first electrode tab 15p may act as a current flow path between the first electrode plate and the first current collector 15m. In some embodiments, when the first electrode plate is manufactured, the first electrode tab 15p is formed by being cut in advance to protrude to one side of the electrode assembly, or the first electrode tab protrudes to one side of the electrode assembly more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 15q (e.g., a second uncoated portion) that is a region to which the second electrode active material is not applied. The second electrode tab 15q may act as a current flow path between the second electrode plate and the second current collector 15n. In some embodiments, the second electrode tab 15q may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

In some embodiments, an electrode assembly 15r is accommodated in the case 15a along with an electrolyte.

In the electrode assembly 15r, the first current collector 15m and the second current collector 15n may be welded and connected to the first electrode tab 15p extending from the first electrode plate and the second electrode tab 15q extending from the second electrode plate, respectively.

The first current collector 15m and the second current collector 15n are electrically connected to the positive electrode terminal 15d and the negative electrode terminal 15e described in FIG. 1, respectively, through connecting members 15k. In some embodiments, an outer circumferential surface of the connecting member 15k may be processed to have screws and fastened to the positive electrode terminal 15d and the negative electrode terminal 15e through screw joining. However, the present disclosure is not limited thereto, and the connecting member 15k may be connected to each of the positive electrode terminal 15d and the negative electrode terminal 15e by riveting or welding.

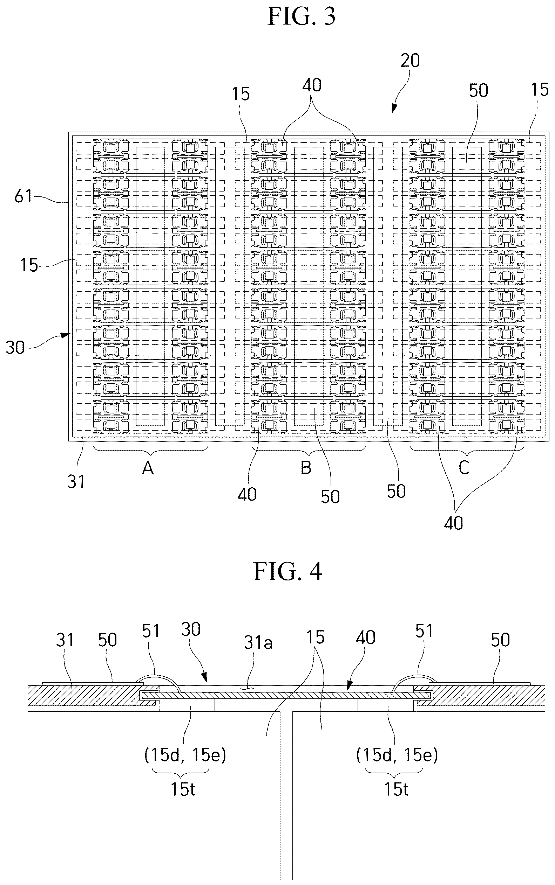

FIG. 3 is a plan view of a secondary battery module 20 according to embodiments of the present disclosure, and FIG. 4 is a cross-sectional view partially illustrating a basic structure of a cell connection unit 30 illustrated in FIG. 3.

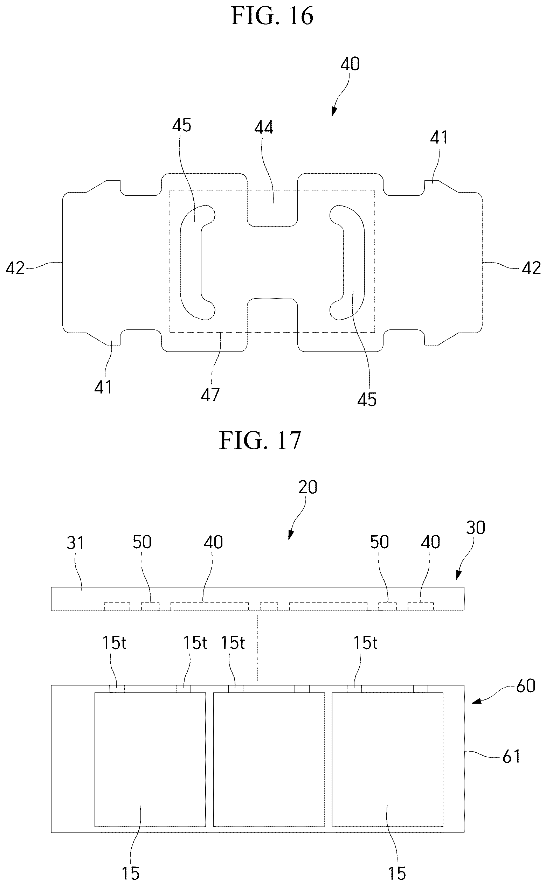

The secondary battery module 20 of the present embodiment may include a module main body 60 (see FIG. 17) and the cell connection unit 30.

The module main body 60 may include a cell housing 61 and a plurality of battery cells 15. The cell housing 61 is an element that opens updwardly and provides an accommodation space and may accommodate the battery cells 15 therein. The cell housing 61 may have substantially a box shape, and the cell connection unit 30 may be mounted on the upper portion of the cell housing 61.

The battery cells 15 may be arranged at a regular interval within the cell housing. The arrangement of the battery cells 15 may be designed in various ways depending on an output voltage. In the case of FIG. 3, the battery cells 15 are divided into Group A, Group B, and Group C. Group A and Group B may be connected in series, and Group B and Group C may be connected in series.

The battery cell 15 may have the positive electrode terminal 15d and the negative electrode terminal 15e on an upper end thereof and may be vertically mounted inside the cell housing 61. For convenience, in the following description, the positive electrode terminal 15d and the negative electrode terminal 15e are collectively referred to as electrode terminals 15t. The electrode terminals 15t include both the positive electrode terminal 15d and the negative electrode terminal 15e. In the drawing of this specification, among the two electrode terminals 15t connected to the bus bar 40, the electrode terminal at one side may be a positive electrode, and the electrode terminal at the other side may be a negative electrode. Alternatively, the electrode terminals at both sides may be positive electrodes or negative electrodes. When neighboring battery cells 15 are connected in series, the electrode terminal at one side is a positive electrode, and the electrode terminal at the other side is a negative electrode. Alternatively, when neighboring battery cells 15 are connected in parallel, the electrode terminals at both sides may be positive electrodes or negative electrodes.

The cell connection unit 30 may electrically connect the battery cell 15 to an external circuit while mounted on the upper portion of the cell housing 61. The cell connection unit 30 may include a unit base 31, a bus bar 40, and a circuit board 50.

The unit base 31 is a structure that is coupled to the upper portion of the cell housing 61. The unit base 31 may be manufactured by injection molding. A bus bar mounting space 31a in which the bus bar 40 is supported may be formed in the unit base 31. The bus bar 40 may be in contact with the electrode terminals 15t of the battery cells by being fitted into the bus bar mounting space 31a. The connection of the bus bars 40 to the electrode terminals 15t is a welding connection, and a description thereof will be given herein.

In addition, the unit base 31 may further include a bus bar holder portion. The bus bar holder portion serves to fix the bus bar 40 accommodated in the bus bar mounting space 31a. The bus bar holder portion includes a support portion 31e and a hook portion 31c. The support portion 31e may serve to support a bottom surface of an edge portion of the bus bar. Further, the hook portion 31c may serve to support an upper surface of the edge portion of the bus bar in a downward direction.

The bus bar 40 may be coupled to the bus bar holder portion while accommodated in the bus bar mounting space 31a of the unit base 31 and may be coupled to the electrode terminal 15t as illustrated in FIG. 4.

The circuit board 50 is connected to the bus bar 40 through a connection wiring 51 while fixed to an upper surface of the unit base 31. The circuit board 50 may be a flexible printed circuit board (FPCB). The circuit board 50 may be connected to an external circuit.

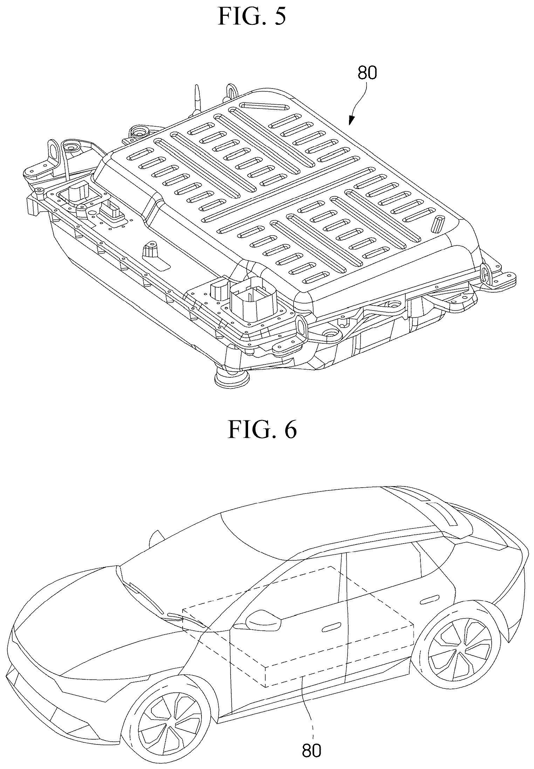

FIG. 5 is a perspective view of a secondary battery pack in which the secondary battery module according to embodiments of the present disclosure is embedded.

A secondary battery pack 80 may be manufactured by embedding a plurality of secondary battery modules into a pack housing designed to be mounted on an actual product. The pack housing may include a fastening unit and an electrical outlet required for mounting the pack housing on a product. In FIG. 5, for convenience of illustration, the illustration of related elements such as a bus bar, a cooling unit, an external terminal, and the like for electrical connection of secondary batteries are omitted. The secondary battery pack may be mounted on a vehicle. The vehicle may be, for example, an electric vehicle, a hybrid vehicle, or a plug-in hybrid vehicle.

FIG. 6 is a view illustrating the secondary battery pack of FIG. 5 applied to a vehicle.

FIG. 6 illustrates an example in which the secondary battery pack 80 according to embodiments of the present disclosure is mounted on a lower portion of a body of the vehicle. The vehicle operates by receiving power from the secondary battery pack 80 according to embodiments of the present disclosure.

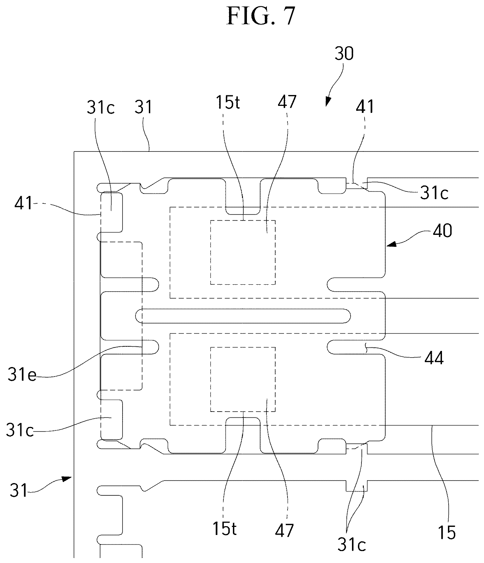

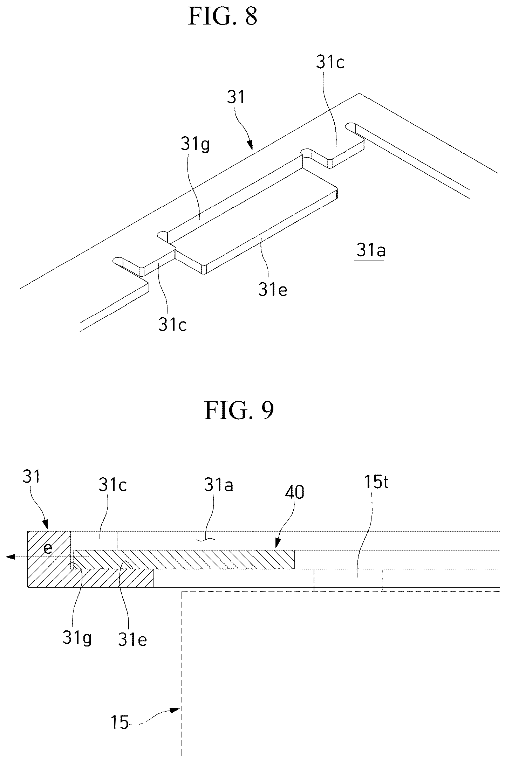

FIG. 7 is a partial plan view of the cell connection unit 30 illustrated in FIG. 3, and FIG. 8 is a partial perspective view for describing a configuration of a unit base 31 included in the cell connection unit illustrated in FIG. 7. Further, FIG. 9 is a view for describing a method of fixing the bus bar to the unit base of FIG. 8.

As illustrated in the drawings, the bus bar 40 may be fitted into the bus bar mounting space 31a provided by the unit base 31. The bus bar 40 is a plate-shaped member formed by pressing a metal plate having a predetermined thickness, and its detailed shape may be changed in various manners.

As illustrated in FIG. 8, the unit base 31 may include a support portion 31e, a hook portion 31c, and a support side portion 31g. The support portion 31e, the hook portion 31c, and the support side portion 31g may serve as a bus bar holder portion that supports the bus bar 40. The shape and number of applications of the support portion, the hook portion, and the support side portion or gaps between the support portion, the hook portion, and the support side portion may be variously changed according to the shape or size of the bus bar.

The support portion 31e is a portion that supports a bottom surface of a portion of an edge of the bus bar 40 and may maintain a gap between the electrode terminal 15t and the bus bar 40. Further, when the cell connection unit 30 is dealt with separately, the cell connection unit 30 may prevent the bus bar 40 from falling downward from the unit base 31.

The hook portion 31c may cover an upper surface of another portion of the edge of the bus bar 40 and support the bus bar 40 in a downward direction. In other words, the hook portion 31c may prevent the bus bar 40 from being lifted in a downward direction. When the cell connection unit 30 is dealt with separately, the hook portion 31c may prevent the bus bar 40 from being separated from an upper portion of the bus bar mounting space 31a in an upward direction.

A gap between an upper surface of the support portion 31e and a bottom surface of the hook portion 31c may correspond to a thickness of the bus bar 40. Therefore, as illustrated in FIG. 9, an outer end portion of the bus bar 40 may be fitted between the hook portion 31c and the support portion 31e. Upper and bottom surfaces of the bus bar 40 may simultaneously be in contact with the hook portion 31c and the support portion 31e.

The support side portion 31g may be a surface facing the bus bar mounting space 31a. The support side portion 31g faces a thickness surface of the bus bar 40 and prevents the bus bar 40 from moving laterally. For example, the support side portion 31g prevents the bus bar 40 from moving in a direction of arrow e in FIG. 9.

As a result, the bus bar 40 fitted into the bus bar mounting space 31a may be maintained in a combined state in a stable manner while supported by the support portion 31e, the hook portion 31c, and the support side portion 31g.

As described, the bus bar 40 is formed by pressing a metal plate having a predetermined thickness and may have a substantially quadrangular shape.

The edge of the bus bar 40 may include a hooked end portion 42 and a pressed portion 41. The hooked end portion 42 is a portion that is supported by being hung on the support portion 31e. Further, the pressed portion 41 is a portion that is covered by the hook portion 31c and pressed by the hook portion 31c. That is, the pressed portion 41 is a portion that is supported in a downward direction by the hook portion 31c.

Further, the bus bar 40 may include a plurality of elastic deformation tolerance slits 44. The elastic deformation tolerance slits 44 may allow elastic deformation of the bus bar. For example, the elastic deformation tolerance slits 44 act to allow the bus bar 40 to be elastically deformed when an external force is applied to the bus bar 40. The elastic deformation tolerance slits 44 may pass through the bus bar in the thickness direction and have a shape that is open in an outward direction of the bus bar 40. The shape of the elastic deformation tolerance slit 44 may be variously implemented as long as elastic deformation of the bus bar 40 can be enabled.

Reference numeral 47 of FIG. 7 indicates a welded surface. The welded surface 47 is a portion that is welded to the electrode terminal 15t. There may be one or more welded surfaces 47 in the bus bar 40. Although the bus bar 40 illustrated in FIG. 7 is given as having two welded surfaces 47, the bus bar 40 illustrated in FIG. 16 may have one welded surface.

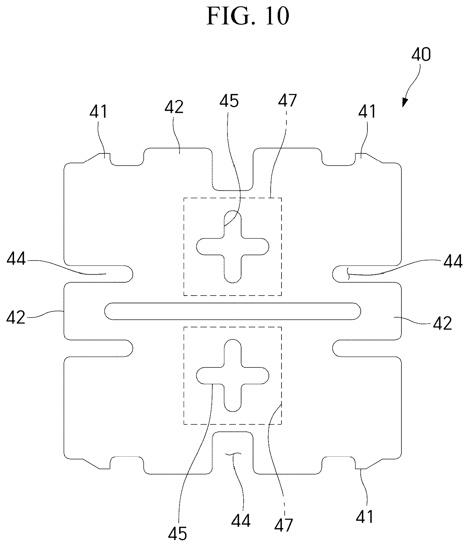

FIGS. 10 to 16 are views illustrating several implementation examples of a bus bar 40 applicable to the cell connection unit of FIG. 7.

As illustrated in the drawings, a plurality of pressed portions 41 and hooked end portions 42 may be formed at edge portions of the bus bar 40. As described herein, the pressed portion 41 is a portion that is supported in a downward direction by the hook portion 31c. Further, the hooked end portion 42 is a portion that is supported by the support portion 31e. In addition, the bus bar 40 may include a plurality of elastic deformation tolerance slits 44.

A terminal corresponding hole 45 in the shape of a cross may be formed in each of two welded surfaces 47 provided on the bus bar 40 of FIG. 10. The terminal corresponding hole 45 is a through-hole corresponding to the electrode terminal 15t. When the cell connection unit 30 is mounted on the cell housing 61, the electrode terminal 15t may be exposed updwardly through the terminal corresponding holes 45. That is, the electrode terminal 15t may be identified through the terminal corresponding holes 45.

By applying the terminal corresponding holes 45, welding heat may be transmitted more rapidly to the electrode terminal 15t. The terminal corresponding holes 45 may serve to improve welding efficiency of the bus bar 40 to the electrode terminal 15t. Further, when the welded portion is inspected, the welding quality may be identified through the terminal corresponding holes 45. For example, through the terminal corresponding holes 45, it is possible to observe whether a bottom surface of the welded surface 47 has been lifted from the electrode terminal 15t.

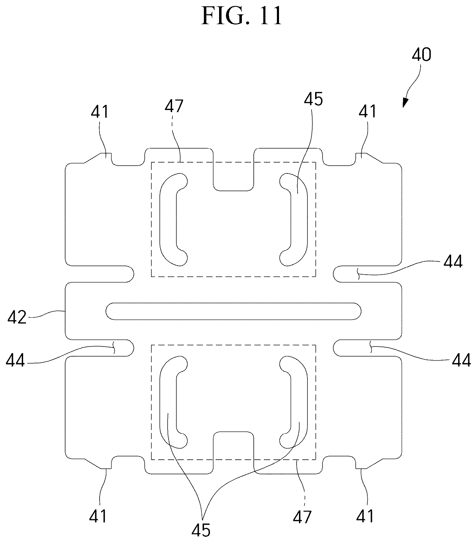

The shape of the terminal corresponding hole 45 may be changed in various manners as long as the terminal corresponding hole 45 can perform the herein-described role. A terminal corresponding hole 45 of the bus bar 40 illustrated in FIG. 11 has the shape of parentheses.

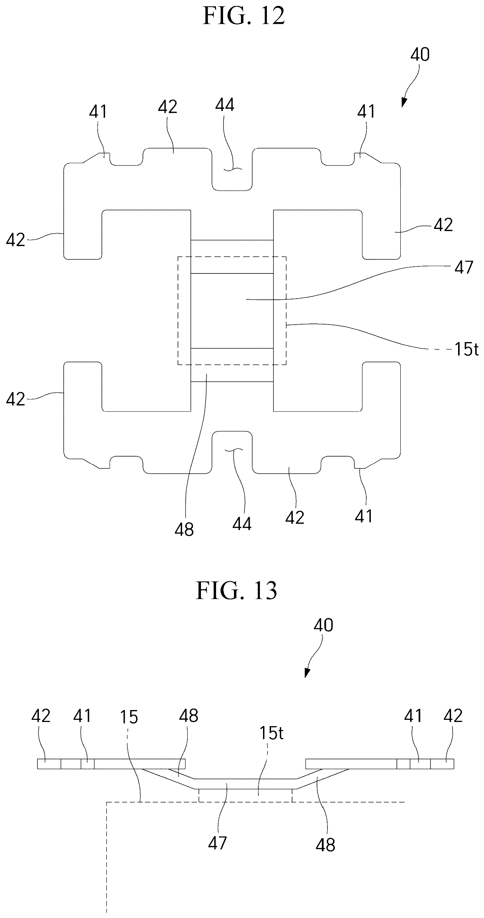

Meanwhile, bus bars 40 illustrated in FIGS. 12 and 13 may have an inclined surface portion 48. The inclined surface portion 48 is located between a welded surface 47 and a portion fixed to a bus bar holder (a portion of a hooked end portion 42). The inclined surface portion 48 is inclined downward from the hooked end portion 42 toward the welded surface 47. The inclined surface portion 48 may provide elasticity to the bus bar 40. For example, when the welded surface 47 presses the hooked end portion 42 in a downward direction while in contact with the electrode terminal 15t, the bus bar 40 becomes elastically deformed. The welded surface 47 may elastically press the electrode terminal 15t due to the elasticity caused by the elastic deformation.

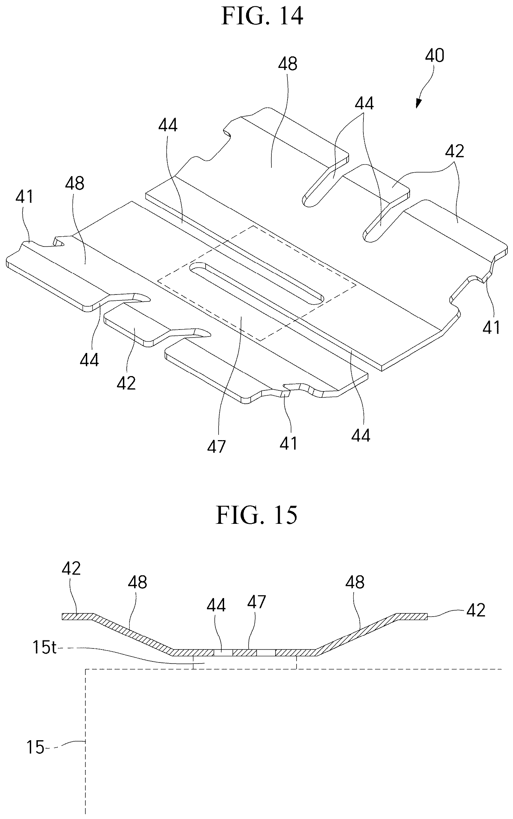

Each of the bus bars 40 of the type illustrated in FIGS. 14 and 15 has a quadrangular shape, and an inclined surface portion 48 may be formed between a central portion on which a welded surface 47 is located and a hooked end portion 42.

Meanwhile, the bus bar 40 illustrated in FIG. 16 may have one welded surface 47 and may be used when connecting Group A and Group B and connecting Group B and Group C illustrated in FIG. 3. With the exception of having one welded surface 47, the bus bar 40 illustrated in FIG. 16 may have the same configuration as the other bus bars described herein.

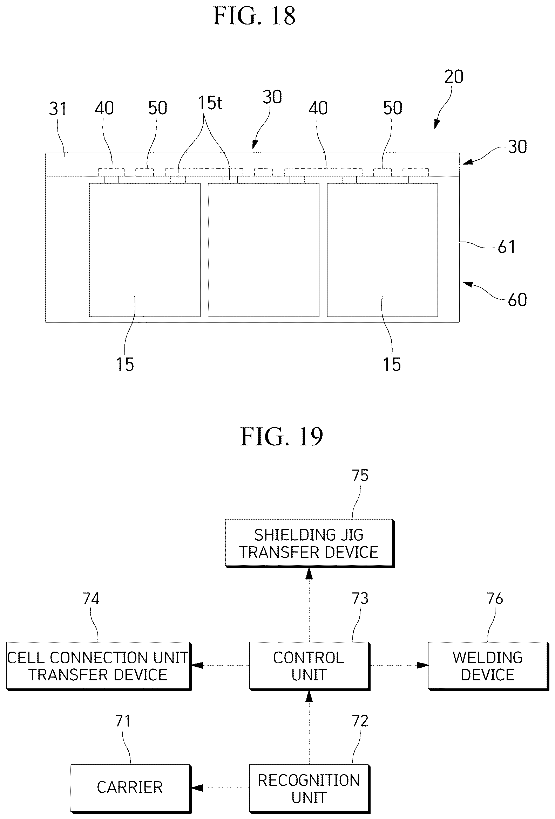

FIGS. 17 and 18 are views illustrating a cell connection unit 30 that is connected to a module main body 60.

As described herein, the module main body 60 includes a cell housing 61 and a plurality of battery cells 15. Further, electrode terminals 15t are located at an upper end portion of the battery cells 15. Further, the cell connection unit 30 includes a unit base 31, a plurality of bus bars 40, and a circuit board 50.

When the cell connection unit 30 having the above configuration is lowered toward the module main body 60 and aligned with the module main body 60, the bus bar 40 is located to correspond to an upper portion of each electrode terminal 15t, as illustrated in FIG. 18. In this state, the bus bar 40 may be welded to the electrode terminal 15t using a welding device.

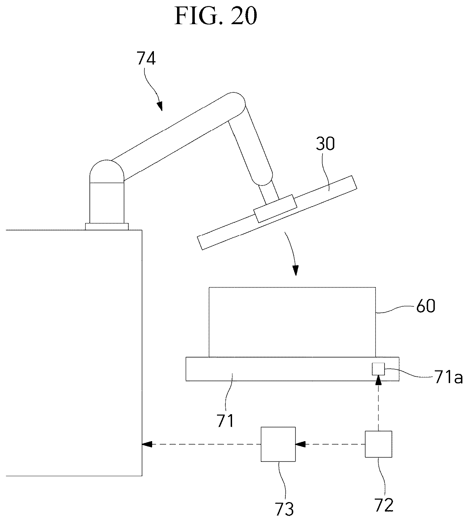

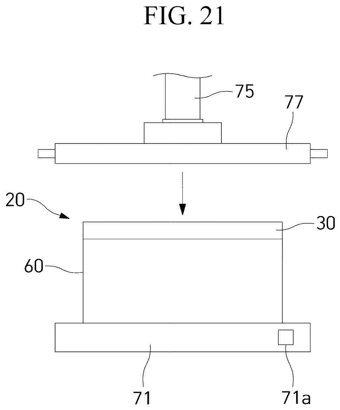

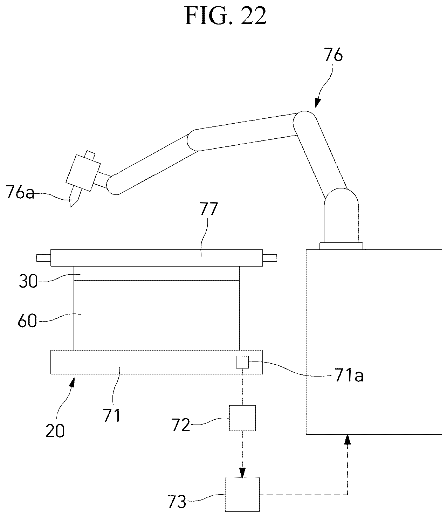

FIG. 19 is a block diagram illustrating a configuration of an apparatus for manufacturing a secondary battery module according to embodiments of the present disclosure, FIG. 20 is a view illustrating a cell connection unit that is transferred using a transport robot of FIG. 19, and FIG. 21 is a view illustrating a shielding jig that is set onto an upper portion of the cell connection unit using a shielding jig transfer device of FIG. 19. Further, FIG. 22 is a view illustrating a bus bar of the cell connection unit that is welded to a secondary battery using a welding device.

As illustrated in the drawings, the apparatus for manufacturing the secondary battery module according to the present embodiment may include a carrier 71, a recognition unit 72, a control unit 73, a cell connection unit transfer device 74, a shielding jig transfer device 75, and a welding device 76.

The carrier 71 may serve to transfer the herein-described module main body 60 to an assembly line while supporting the module main body 60. The module main body 60 may move to the assembly line while loaded onto the carrier 71. The assembly line may be a work line on which the module main body 60 and the cell connection unit 30 are assembled and welded.

In particular, a marking unit 71a is displayed on one side of the carrier 71. The marking unit 71a may provide information on the module main body 60 that is being loaded. For example, the type code of the module main body 60 that is currently being loaded may be displayed on the marking unit 71a. The marking unit 71a may have the form of a barcode or quick response (QR) code. The marking unit 71a may be manufactured and attached by a worker.

The recognition unit 72 may serve to recognize the marking unit. That is, the recognition unit 72 reads the content stored in the marking unit 71a. The recognition unit 72 transmits the identified data, that is, the model or type of the module main body 60, to the control unit 73.

The control unit 73 may be connected to the recognition unit 72 to receive the data recognized by the recognition unit and output a control signal. That is, the control unit 73 controls the cell connection unit transfer device 74, the shielding jig transfer device 75, and the welding device 76 on the basis of the data received from the recognition unit 72.

The cell connection unit transfer device 74 serves to pick up the cell connection unit 30 waiting to be inserted and then mounts the cell connection unit 30 on the module main body 60 waiting in the carrier 71. The cell connection unit transfer device 74 may have a configuration of a multi-joint robot.

Subsequently, when the cell connection unit 30 is coupled onto the module main body 60 by the cell connection unit transfer device 74, the shielding jig 77 is mounted on the cell connection unit 30 using the shielding jig transfer device 75. The shielding jig 77 may serve to support the bus bar in a downward direction when the bus bar 40 is welded and also block the welding heat of the welding device from being transmitted to the surroundings thereof. An access path that allows a welding tip 76a of the welding device 76 to access the bus bar 40 is provided on the shielding jig 77.

The shielding jig transfer device 75 may position the shielding jig 77 on an upper portion of the cell connection unit 30, and after the welding is completed, separate the shielding jig 77 from the cell connection unit 30. The shielding jig transfer device 75 may be implemented in various manners as long as the shielding jig transfer device 75 can perform such roles. For example, the shielding jig transfer device 75 may be implemented in the form of a multi-joint robot.

As illustrated in FIG. 22, the welding device 76 may access the bus bar through the access path on the shielding jig while the shielding jig 77 is mounted on the cell connection unit 30 and may weld the bus bar to the electrode terminal 15t of the battery cell.

Eventually, the apparatus for manufacturing the secondary battery module formed as described herein is configured to automate a series of processes for assembling and welding the module main body 60 and the cell connection unit 30.

The carrier 71 may move to the assembly line of the apparatus for manufacturing the secondary battery module while stably supporting the module main body 60. In particular, the marking unit 71a includes information on the type of the module main body and may provide data in the form of a barcode or QR code. The recognition unit reads the marking unit of the carrier to identify the information on the module main body and transmits the identified information to the control unit.

The control unit 73 controls the operation of the cell connection unit transfer device 74, the shielding jig transfer device 75, and the welding device 76 according to the cell connection unit 30 and the type of the module main body 60 on the basis of the data received from the recognition unit.

The cell connection unit transfer device 74 picks up the prepared cell connection unit 30 and accurately mounts the picked up cell connection unit 30 on the module main body. The cell connection unit transfer device 74 may be implemented as a multi-joint robot, thereby providing high precision.

The shielding jig may serve to stably support the bus bar during welding and block the welding heat from being transmitted to the surroundings thereof. In addition, the welding device 76 may access the bus bar through the access path on the shielding jig and weld the bus bar to the electrode terminal of the battery cell. When the welding is completed, the shielding jig transfer device may remove the shielding jig to prepare for a subsequent process.

The secondary battery module of the present disclosure, which is formed as described herein, has a cell connection unit that maintains connections between bus bars and circuit boards with respect to battery cells, and thus a process of manufacturing the secondary battery module is simple, and problems such as electrical short and the like caused by welding failure of bus bars do not occur.

Further, the apparatus for manufacturing the secondary battery module performs welding while covering battery cells with a cell connection unit on which bus bars and circuit boards are pre-mounted, and thus the connection work of the bus bars and the circuit boards with respect to the battery cells is rapidly performed, and welding failure does not occur. Further, even when the type of secondary battery module is changed, there is a short time for changing the settings of the production line equipment.

Although the present disclosure has been described herein with respect to embodiments thereof, the present disclosure is not limited thereto.

## Claims

1. A secondary battery module (20) comprising:
a module main body (60) including a cell housing (61) which opens upwardly and provides an accommodation space, and a plurality of battery cells (15) arranged in the cell housing (61); and
a cell connection unit (30) including a unit base (31) coupled to an upper portion of the cell housing (61), a plurality of bus bars (40) fitted to the unit base (31) and connected to the battery cells (15), and circuit boards (50) connected to the bus bars (40).

2. The secondary battery module as claimed in claim 1, wherein the battery cell (15) is a prismatic battery cell that is vertically mounted inside the cell housing (61) and has electrode terminals on an upper end thereof.

3. The secondary battery module as claimed in any one of the preceding claims, wherein the unit base (31) is manufactured by injection molding and provides a bus bar mounting space (31a) in which the bus bars (40) are supported.

4. The secondary battery module as claimed in claim 3, wherein a bus bar holder portion that fixes the bus bars (40) installed in the bus bar mounting space (31a) is formed in the unit base (31).

5. The secondary battery module as claimed in claim 4, wherein the bus bar (40) is welded and coupled to the electrode terminal of the battery cell (15) while fixed to the bus bar holder portion.

6. The secondary battery module as claimed in claim 4 or 5, wherein the bus bar (40) is a plate-shaped member formed by pressing a metal plate, and
the bus bar holder portion comprises:
a support portion that supports a lower surface of a portion of an edge of the bus bar to maintain a gap between the bus bar and the electrode terminal; and
a hook portion that supports an upper surface of another portion of the edge of the bus bar in a downward direction.

7. The secondary battery module as claimed in claim 6, wherein the bus bar (40) comprises:
a hooked end portion that is supported by being hung on the support portion; and
a pressed portion pressed by the hook portion.

8. The secondary battery module as claimed in any one of the claims 5 to 7, wherein the bus bar (40) has a welded surface formed to be welded to the electrode terminal, and the welded surface is provided as one or more welded surfaces.

9. The secondary battery module as claimed in any one of the claims 6 to 8, wherein an elastic deformation tolerance slit that allows elastic deformation of the bus bar (40) is formed in the bus bar (40).

10. An apparatus for manufacturing a secondary battery module (20), comprising:
a carrier supporting a module main body (60) and having a marking unit that is mounted on one side thereof and provides information on the module main body (60), wherein the module main body (60) comprises a cell housing (61) which opens upwardly and provides an accommodation space, and a plurality of battery cells (15) arranged in the cell housing (61);
a recognition unit configured to recognize the marking unit;
a control unit that is connected to the recognition unit to receive data recognized by the recognition unit;
a cell connection unit transfer device that mounts a cell connection unit (30), which includes a unit base (31) that is connectable to an upper portion of the cell housing (61), a bus bar that is mounted on the unit base (31) and corresponds to the battery cell (15), and a circuit board (50) connected to the bus bar, on the module main body (60);
a shielding jig transfer device configured to mount a shielding jig on the cell connection unit (30); and
a welding device configured to weld bus bars (40) to the battery cells (15) through a path of the shielding jig while the shielding jig is mounted.

11. The apparatus as claimed in claim 10, wherein the marking unit is an ID display unit on which a type code of the module main body (60) is displayed.

12. The apparatus as claimed in claim 10 or 11, wherein the battery cell (15) is a prismatic battery cell that is vertically mounted inside the cell housing (61) and has electrode terminals on an upper end thereof.

13. The apparatus as claimed in claim 12, wherein the unit base (31) is manufactured by injection molding and provides a bus bar mounting space (31a) in which the bus bars (40) are supported.

14. The apparatus as claimed in claim 13, wherein a bus bar holder portion that fixes the bus bars (40) installed in the bus bar mounting space (31a) is formed in the unit base (31).

15. The apparatus as claimed in claim 14, wherein the bus bar is welded to the electrode terminal of the battery cell (15) by the welding device while fixed to the bus bar holder portion.
